(19) Europäisches Patentamt
European Patent Office
Office européen des brevets

(11) **EP 4 525 008 A1**

(12) **EUROPEAN PATENT APPLICATION**

(43) Date of publication:
**19.03.2025 Bulletin 2025/12**

(21) Application number: **24198685.0**

(22) Date of filing: **05.09.2024**

(51) International Patent Classification (IPC):
$H01F\ 27/28$ (2006.01)     $H01F\ 3/12$ (2006.01)
$H01F\ 27/255$ (2006.01)     $H01F\ 27/30$ (2006.01)
$H01F\ 38/08$ (2006.01)     $H02M\ 3/00$ (2006.01)

(52) Cooperative Patent Classification (CPC):
**H01F 3/12; H01F 27/255; H01F 27/2804;
H01F 27/306; H01F 38/08; H02M 1/0064;
H02M 3/01; H02M 3/33573; H01F 2027/065;
H01F 2027/2819; H01F 2038/006**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023 JP 2023149037
21.03.2024 JP 2024044788**

(71) Applicant: **Proterial, Ltd.
Tokyo 135-0061 (JP)**

(72) Inventors:
• **UMENO, Toru
Tokyo, 135-0061 (JP)**
• **NAMBA, Fukuya
Tokyo, 135-0061 (JP)**

(74) Representative: **Wilson Gunn
Centurion House
129 Deansgate
Manchester M3 3WR (GB)**

(54) **MATRIX TRANSFORMER**

(57) In a matrix transformer used for a high-frequency switching power supply, two U-shaped ferrite cores each having two legs and one connecting part are used to form a core body by opposing butt surfaces of the legs thereof, whereby a closed magnetic circuit is formed, m+1 pieces of the core body are provided in order to form m magnetic circuits of the transformer, a row of the core bodies to be the magnetic circuits of the transformer is configured by one-dimensionally arranging the core bodies so as to be adjacent to each other, and a primary coil and a secondary coil wound around the legs are provided.

FIG. 1

EP 4 525 008 A1

**Description**

**CROSS-REFERENCE TO RELATED APPLICATION**

The present application claims priority from Japanese Patent Applications No. 2023-149037 filed on September 14, 2023 and No. 2024-044788 filed on March 21, 2024, the contents of which are hereby incorporated by reference into this application.

**TECHNICAL FIELD OF THE INVENTION**

The present invention relates to a transformer used for a high-frequency switching power supply.

**BACKGROUND OF THE INVENTION**

As wide band gap (WBG) semiconductor devices capable of high-speed switching such as those made of SiC or GaN have prevailed in the market, studies to increase the frequency of resonant converters such as LLC converters have been conducted.

Transformers which are magnetic components have the problem of increased AC loss in the coil portion due to the skin effect and proximity effect as the frequency increases. The former can be solved to some extent by using a litz wire or a printed coil, and the latter by dispersing the magnetomotive force by using a matrix transformer. However, there has been no progress in the size reduction thereof.

**SUMMARY OF THE INVENTION**

The matrix transformer described in Patent Document 1 (US2018-0026182) requires an external resonant inductor necessary for the resonant circuit, and is thus not suitable for the size reduction of the switching power supply. It results in an integrated and large-size core (the core becomes expensive and vulnerable to vibration).

The matrix transformer described in Patent Document 2 (US2019-0379292) has a structure in which the resonant inductor, which needs to be externally attached, is integrated with the matrix transformer, but it leads to the size increase and is thus not suitable for the size reduction of the switching power supply. It results in an integrated and large-size core (the core becomes expensive and vulnerable to vibration).

In the matrix transformer described in Patent Document 3 (US2020-0350117), leakage inductance is created by generating leakage flux by increasing the magnetic resistance by providing a magnetic gap in the magnetic path of the transformer. Therefore, since this leakage inductance is used as a resonant inductor, there is no need to add a resonant inductor. However, increasing the magnetic resistance causes the decrease in the self-inductance of the primary and secondary coils, and results in the decrease in the mutual inductance necessary for transferring magnetic energy. This leads to the size increase and is thus not suitable for the size reduction of the switching power supply. It results in an integrated and large-size core (the core becomes expensive and vulnerable to vibration).

This disclosure has been proposed in order to solve the above-described problems in the prior art, and an object thereof is to provide a matrix transformer that can be configured with a reduced size.

A matrix transformer according to the present invention is a matrix transformer used for a high-frequency switching power supply, two U-shaped ferrite cores each having two legs and one connecting part are used to form a core body by opposing butt surfaces of the legs thereof, whereby a closed magnetic circuit is formed, m+1 pieces of the core body are provided in order to form m magnetic circuits of the transformer, a row of the core bodies to be the magnetic circuits of the transformer is configured by one-dimensionally arranging the core bodies so as to be adjacent to each other, and a primary coil and a secondary coil wound around the legs are provided.

In the matrix transformer according to the present invention mentioned above, n rows of the core bodies are provided, and the rows of the core bodies are arranged two-dimensionally such that the respective core bodies are adjacent to each other, whereby a core matrix to be the magnetic circuits of the transformer is configured.

In the matrix transformer according to the present invention mentioned above, a magnetic path bypass is provided between all or some of the two U-shaped ferrite cores constituting the core bodies.

In the matrix transformer according to the present invention mentioned above, in each row, a length of the connecting parts of the U-shaped ferrite cores at both ends of the row is about 50 to 70% of a length of the connecting parts of the other U-shaped ferrite cores.

According to the present invention, it is possible to provide a matrix transformer that can be configured with a reduced size.

## BRIEF DESCRIPTIONS OF THE DRAWINGS

FIG. 1 is a diagram illustrating the operation principle of one embodiment of this disclosure.

FIG. 2 is a diagram illustrating the wiring of coils of one embodiment of this disclosure.

FIG. 3 is a connection wiring diagram of a transformer of one embodiment of this disclosure.

FIG. 4 is a diagram of a U-shaped ferrite core 1 of one embodiment of this disclosure.

FIG. 5 is a diagram of a U-shaped ferrite core 2 of one embodiment of this disclosure.

FIG. 6 is a top view of one embodiment of this disclosure.

FIG. 7 is a top view of another embodiment of this disclosure.

FIG. 8 is a cross-sectional view of one embodiment of this disclosure.

FIG. 9 is a perspective view of one embodiment of this disclosure.

FIG. 10 is a side view of one embodiment of this disclosure.

FIG. 11 is a diagram illustrating bar-shaped ferrite cores serving as a magnetic path bypass of this disclosure.

FIG. 12 is a structural drawing of a printed coil of a transformer of one embodiment of this disclosure.

FIG. 13 is a connection wiring diagram of a transformer of one embodiment of this disclosure.

FIG. 14 is a diagram illustrating a transformer of one embodiment of this disclosure.

FIG. 15 is a table of design values of electrical characteristics of a transformer of one embodiment of this disclosure.

FIG. 16 is a circuit diagram of a full bridge LLC converter using one embodiment of this disclosure.

FIG. 17 is a diagram illustrating a configuration example of the LLC converter on the circuit simulator LTspice (produced by Analog Devices, Inc.).

FIG. 18 is a diagram illustrating operation specifications of the LLC converter.

FIG. 19 is a diagram illustrating simulation waveforms of the transformer during operation of the LLC converter.

FIG. 20 is a table of the loss obtained from the above waveforms.

FIG. 21 is a table illustrating the comparison in the characteristics between a transformer of one embodiment of this disclosure and a transformer using of a single ferrite core.

FIG. 22 is a table illustrating the comparison in the dimensions between the transformer of one embodiment of this disclosure and a transformer using a single ferrite core of ML29D and a resonant coil when they are designed to have the same characteristics.

FIG. 23 is a cross-sectional view illustrating one embodiment of this disclosure.

## DESCRIPTIONS OF THE PREFERRED EMBODIMENTS

Embodiments of this disclosure will be described in detail below. This disclosure is not limited to the following embodiments, and can be implemented with modifications as appropriate within the scope of the purpose of this disclosure.

(1) The matrix transformer of this disclosure can have the following configurations.

(a) Two U-shaped ferrite cores form a core body by opposing butt surfaces of legs thereof (surfaces corresponding to end faces of the legs of the U-shaped ferrite cores), whereby a single closed magnetic circuit is formed. A row of the core bodies in which m+1 pieces of the core body are arranged one-dimensionally can be configured. Note that m is a natural number and is the number of parts that function as a transformer, and m+1 is the number of core bodies. Here, the thickness of the U-shaped ferrite core is desirably about 2.0 mm to 12 mm. From the viewpoint of mass productivity of ferrite and from the viewpoints of reducing eddy current loss of the core, achieving uniform magnetic flux density distribution, and reducing dimensional resonance when used as a high-frequency transformer, a thickness of 12 mm or less is desirable, and further a thickness of 2.0 mm or more is desirable because the influence of the latter viewpoint can be ignored. The U-shape refers to, for example, a U-shape or a C-shape (a shape in which three ferrite plates are prepared and two ferrite plates thereof are joined to both ends of the other one ferrite plate so as to be perpendicular to each other. The same shape can also be produced by pressure molding of ferrite powder).

(b) Primary and secondary coils of a transformer, which are attached so as to be wound around the legs of the core bodies.

(2) The above-described matrix transformer of this disclosure can have the following configurations.

(a) A matrix of core bodies including (m+1)×n core bodies can be formed by arranging n rows of the core bodies described above so as to be adjacent to each other and arrange the core bodies two-dimensionally. Note that n is a natural number.

(b) Primary and secondary coils of a transformer, which are attached so as to be wound around the legs of the core bodies.

(3) The above-described matrix transformer of this disclosure can have the following configuration.

A magnetic path bypass is provided between the butt surfaces of the legs of the two U-shaped ferrite cores constituting the core body.

(4) The above-described matrix transformer of this disclosure can have the following configurations.

In each row, the length of the connecting parts of the U-shaped ferrite cores at both ends of the row is 50 to 70% of the length of the connecting parts of the other U-shaped ferrite cores.

The above-described matrix transformer of this disclosure uses a plurality of rows connected together as a unit, and can cope with high-frequency switching. The connection of U-shaped ferrite cores and the connection of the rows can be made using an adhesive, or can be made by supporting them with bobbins. The adhesive could become a magnetic gap depending on the thickness thereof, and it is thus desirable to use bobbins from the viewpoint of reducing the use of adhesive.

By using the combination of two types of cores for the U-shaped ferrite cores, a scalable transformer that can handle a variety of voltages and powers can be made. In addition, by separately creating two types of U-shaped ferrite cores, the size reduction and vibration resistant structure can be realized, which makes it possible to apply it to such applications as in-vehicle use.

The matrix transformer of this disclosure can use the following ferrite as the U-shaped ferrite core and magnetic path bypass.

An example of the ferrite used in this disclosure is a MnZn-based ferrite sintered body that contains main components composed of Fe of 53.30 to 53.80 mol% expressed in terms of $Fe_2O_3$, Zn of 6.90 to 9.50 mol% expressed in terms of ZnO, and Mn of the remainder expressed in terms of MnO, and subcomponents composed of, relative to the main components of 100 parts by mass in total as above, Si of 0.003 to 0.020 parts by mass expressed in terms of $SiO_2$, Ca of more than 0 to not more than 0.35 parts by mass expressed in terms of $CaCO_3$, Co of 0.30 to 0.50 parts by mass expressed in terms of $Co_3O_4$, Zr of 0.03 to 0.10 parts by mass expressed in terms of $ZrO_2$, and Ta of 0 to 0.05 parts by mass expressed in terms of $Ta_2O_5$, and has an average crystal grain size of 3 $\mu$m or more and less than 8 $\mu$m and a sintered body density of 4.65 g/cm$^3$ or more.

Here, it is preferable that the Ta content is 0.01 parts by mass or more expressed in terms of $Ta_2O_5$.

Here, it is preferable that the Fe content is 53.40 to 53.70 mol% expressed in terms of $Fe_2O_3$, the Zn content is 7.00 to 9.40 mol% expressed in terms of ZnO, the Si content is 0.004 to 0.015 parts by mass expressed in terms of $SiO_2$, the Co content is 0.30 to 0.45 parts by mass expressed in terms of $Co_3O_4$, and the Zr content is 0.05 to 0.09 parts by mass expressed in terms of $ZrO_2$.

Another example of the ferrite used in this disclosure is a MnZn-based ferrite that contains Fe, Mn, and Zn as main components and at least Co, Si, and Ca as subcomponents, in which the main components are composed of Fe of 53 to 56 mol% expressed in terms of $Fe_2O_3$, Zn of 3 to 9 mol% expressed in terms of ZnO, and Mn of the remainder expressed in terms of MnO, the subcomponents are composed of, relative to the oxide of above main components of 100 mass%, Co of 0.05 to 0.4 mass% expressed in terms of $Co_3O_4$, Si of 0.003 to 0.015 mass% expressed in terms of $SiO_2$, Ca of 0.06 to 0.3 mass% expressed in terms of $CaCO_3$, V of 0 to 0.1 mass% expressed in terms of $V_2O_5$, and Nb and/or Ta of 0 to 0.3 mass% (expressed in terms of $Nb_2O_5$ and/or $Ta_2O_5$) in total, and the magnetic core loss Pcv between 0 and 140°C at a frequency of 1 MHz and an operating magnetic flux density of 75 mT is less than 2180 kW/m$^3$.

Another example of the ferrite used in this disclosure is a MnZn-based ferrite that is used at a frequency of 1 MHz or more and an operating magnetic flux density of 75 mT or less, contains Fe of 53 to 56 mol% expressed in terms of $Fe_2O_3$, Zn of 3 to 9 mol% expressed in terms of ZnO, and Mn of the remainder expressed in terms of MnO as main components, and contains, relative to the above main components of 100 mass% expressed in terms of oxide, Co of 0.05 to 0.4 parts by mass expressed in terms of $Co_3O_4$, Si of 0.003 to 0.015 parts by mass expressed in terms of $SiO_2$, Ca of 0.06 to 0.3 parts by mass expressed in terms of $CaCO_3$, V of 0 to 0.1 parts by mass expressed in terms of $V_2O_5$, Nb of not more than 0.05 parts by mass (excluding 0) expressed in terms of $Nb_2O_5$, and Ta of 0 to 0.1 parts by mass expressed in terms of $Ta_2O_5$ as subcomponents, in which the magnetic core loss Pcv between 0 and 120°C at a frequency of 2 MHz and an operating magnetic flux density of 50 mT is less than 1100 kW/m$^3$ when made into a magnetic core.

Here, it is preferable that the V content is 0 to 0.05 parts by mass expressed in terms of $V_2O_5$, the Nb content is 0.01 to 0.04 parts by mass expressed in terms of $Nb_2O_5$, and the Ta content is 0 to 0.05 parts by mass expressed in terms of $Ta_2O_5$.

(First embodiment)

When a voltage $V_1$ is applied to the primary coil of a transformer formed by connecting m transformers in series, the operating magnetic flux density $B_m$ in the core generated by $V_1$ is given by equation (1).

[Equation 1]

$$B_m = \frac{V_1}{m} \cdot \frac{1}{NA_e f_s} \qquad (1)$$

Here, N indicates the number of turns of the primary coil in the single transformer, and $A_e$ and $f_s$ indicate an effective cross-sectional area of the core and a frequency of $V_1$, respectively. This shows that the operating magnetic flux density (corresponding to the magnetic flux density inside the core) can be reduced to 1/m.

Furthermore, if the current flowing through the primary coil is defined as $I_1$, the maximum value of the magnetomotive force generated in the single transformer is given by equation (2) when $R_m$ is the magnetic resistance of the core of the single transformer, and the magnetomotive force can also be reduced to 1/m.

[Equation 2]

$$NI_1 = R_m B_m A_e = R_m \cdot \frac{V_1}{m} \cdot \frac{1}{Nf_s} \qquad (2)$$

As described above, it can be understood that the core loss that increases in accordance with $B_m$ and the copper loss due to the proximity effect that increases in accordance with magnetomotive force can be reduced by increasing m.

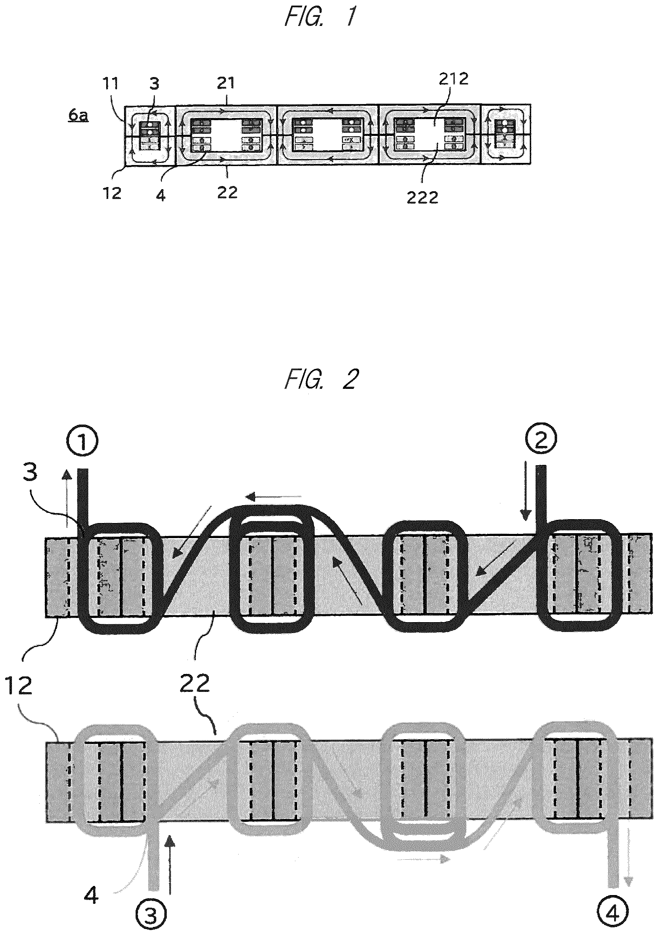

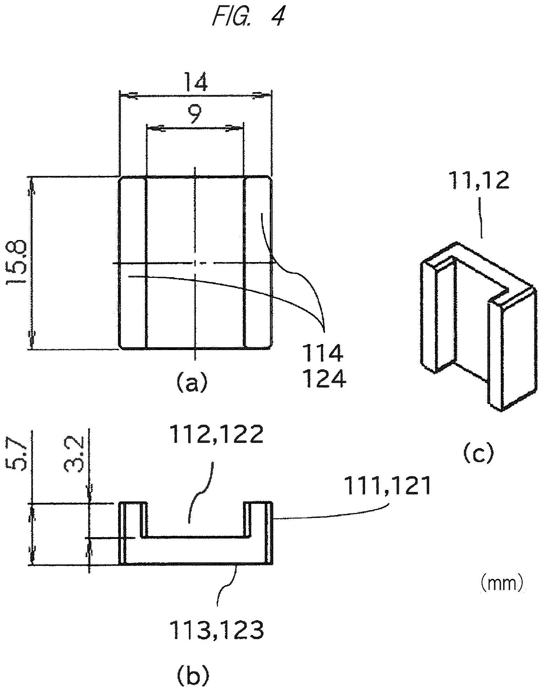

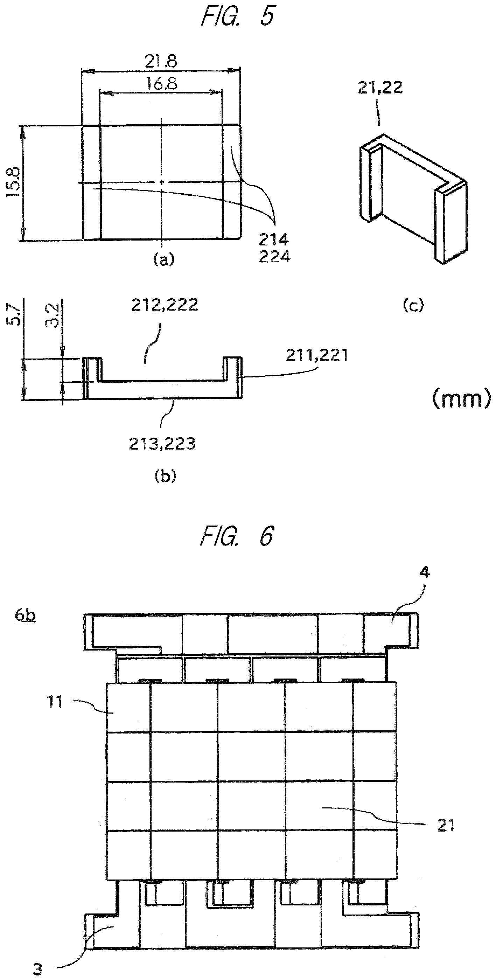

FIG. 1 illustrates a cross-sectional view of a matrix transformer used for a high-frequency switching power supply in the first embodiment of this disclosure. In this case, m is 4 (m = 4). In order to form m magnetic circuits of the transformer (m is the number of parts that function as a transformer), there are m+1 core bodies. Here, m is 4 and thus m+1 is 5 (m+1 = 5), and n corresponds to 1 (n = 1). The matrix transformer is made up of two pairs of U-shaped ferrite cores 1 including 11 and 12, three pairs of U-shaped ferrite cores 2 including 21 and 22 arranged therebetween, and a primary coil 3 and a secondary coil 4 of the transformer. Here, · and × indicate that the load currents of the coils flowing perpendicularly to the paper surface are in the opposite directions. Further, the arrows depicted inside the cores indicate the directions of the magnetic flux generated by the load currents flowing through the primary and secondary coils. The primary load current flows through the primary coil so as to cancel out the magnetic flux generated by the secondary current. Therefore, the magnetic flux inside the core due to the load current is canceled out. The dark colors indicate the primary coil, and the light colors indicate the secondary coil. Two U-shaped ferrite cores each having two legs (referred to also as side legs) and one connecting part (referred to also as yoke part) are used to form a core body by opposing butt surfaces of the legs thereof, whereby a closed magnetic circuit is formed. A row of the core bodies to be magnetic circuits of the transformer is configured by one-dimensionally arranging the core bodies so as to be adjacent to each other. As illustrated in FIG. 4 and FIG. 5, the length of the yoke part of the U-shaped ferrite core 2 is twice as long as that of the U-shaped ferrite cores 1 at both ends, and the lengths of the legs are all the same. The length of the connecting parts of the U-shaped ferrite cores at both ends is preferably 50 to 70% of the length of the connecting parts of the other U-shaped ferrite cores, and it is 50% in the first embodiment. The coils are wired by winding two turns around each of the four pairs of opposing legs of the U-shaped ferrite cores. Here, opposing refers to butting the butt surfaces (end faces) of the legs (side legs) of the U-shaped ferrite cores against each other. A core body is configured by opposing the butt surfaces, thereby forming a closed magnetic circuit. FIG. 2 illustrates the wiring state. In this figure, the upper U-shaped ferrite cores 11 and 21 are omitted and only the lower U-shaped ferrite cores 12 and 22 are left so as to make the coil wiring clearly seen. The wiring from (1) to (2) represents the primary coil of the transformer, and the wiring from (3) to (4) represents the secondary coil of the transformer.

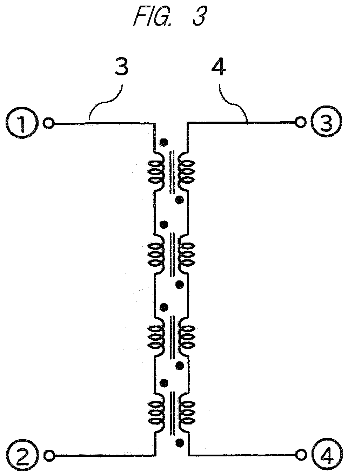

The matrix transformer thus configured operates as a transformer with a transformation ratio of 1:1 in which four independent transformers each having two turns of winding for the primary and secondary are connected in series as illustrated in FIG. 3. Further, since the magnetomotive force is dispersed as with the conventional matrix transformers, the increase in AC resistance due to the proximity effect during high-frequency operation can be reduced. Furthermore, since it is composed by the combination of multiple small and thin cores, it can flexibly cope with the voltage and power to be handled, and ferrite with low loss even at high frequencies can be used. In other words, since high-frequency operation is possible, this matrix transformer can be used for a high-frequency switching power supply. It is also possible to reduce the size and height of the matrix transformer. In addition, because of the combination of small and thin cores, it is possible to mass-produce the cores at a low cost. As for high frequencies, it can be used for high frequencies of, for example, 200 kHz or more, 500 kHz or more, and 1 MHz or more.

In the matrix transformer according to one embodiment of this disclosure, two sets of U-shaped ferrite cores 1 (11, 12) are arranged, between which three sets of U-shaped ferrite cores 2 (21, 22) are arranged such that the core bodies are formed by opposing the legs (side legs) thereof to each other at the butt surfaces. Here, a high-frequency low-loss material ML95S produced by Proterial, Ltd. is used as the U-shaped ferrite cores. The primary coil and secondary coil are wound around the legs of the U-shaped ferrite cores. Specifically, the configuration of the two turns (corresponding to a configuration of being wound twice) of the primary coil and secondary coil are formed using the patterns of inner two layers of a four-layer board made of FR4 which is a base material for printed circuit boards. The thickness of the copper foil is set to 50 $\mu$m at which the optimum resistance value can be obtained from the trade-off relationship between DC resistance and AC resistance. Since the outermost layer has no patten other than the terminals (1), (2), (3), and (4), it is used as an insulating layer between the coils and between the coil and the core.

In this embodiment, a printed coil made up of a printed circuit board is used as the coils, but for example, a litz wire with a strand diameter of 50 to 100 $\mu$m and the number of strands of about 1000 to 2500 may also be used. Further, the number m of U-shaped ferrite cores 2 may be increased or decreased depending on the input voltage and power.

(Second Embodiment)

If the magnetic circuits of the transformer made up of m magnetic circuits connected in series are arranged such that window portions of n cores of the single transformer are opposed to each other, the effective cross-sectional area of the cores of the single transformer can be increased by n times. The window portions correspond to the holes of the core bodies. If the window portions are coupled to each other, the coils can be made continuous. In this case, the operating magnetic flux density is given by equation (3).

[Equation 3]

$$B_m = \frac{V_1}{m} \cdot \frac{1}{N n A_e f_s} \quad (3)$$

This shows that the magnetic flux density can be reduced to 1/mn. Further, since the effective cross-sectional area of the cores of the single transformer is increased by n times and the magnetic resistance thereof is reduced to 1/n, equation (4) is obtained and the magnetomotive force can be reduced to 1/mn.

[Equation 4]

$$N I_1 = \frac{R_m}{n} B_m n A_e = R_m \cdot \frac{V_1}{mn} \cdot \frac{1}{N f_s} \quad (4)$$

As a result, the core loss depending on the magnetic flux density and the copper loss due to the proximity effect depending on the magnetomotive force can be further reduced as compared with the first embodiment.

FIG. 6 illustrates a top view of a matrix transformer used for a high-frequency switching power supply in the second embodiment of this disclosure. Here, the configuration described in the first embodiment is used and m is 4 (m = 4) and n is 4 (n = 4). Also, n rows of the core bodies are arranged two-dimensionally such that the respective core bodies are adjacent to each other, whereby the core matrix to be the magnetic circuits of the transformer is configured. Since the number m of magnetic circuits of the transformer is 4 (m = 4) and the number m+1 of core bodies is 5 (m+1 = 5), there are 16 magnetic circuits of the transformer and 20 core bodies. In this matrix transformer, three rows similar to that of the the U-shaped ferrite cores in the first embodiment are added such that the window portions of the U-shaped ferrite cores in the first embodiment are opposed to each other, thereby forming a matrix of U-shaped ferrite cores with four rows in total. The high-frequency operation is possible, and this matrix transformer can be used for a high-frequency switching power supply.

In this embodiment, the ferrite core and the printed coil (corresponding to the primary coil and secondary coil) made of the same materials as those used in the first embodiment are used. However, since the cross-sectional area of the U-shaped ferrite cores increases by four times when forming the core bodies to form the closed magnetic circuit, the coil inductance can be increased by four times and the operating magnetic flux density can be reduced to 1/4, which makes it possible to handle large power.

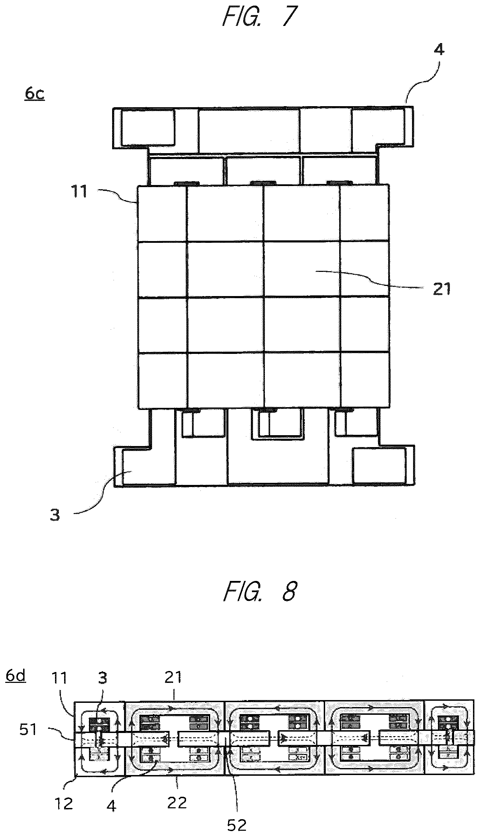

Furthermore, the number m-1 of core bodies made up of pairs of U-shaped ferrite cores 2 (21, 22) arranged between the two core bodies made up of pairs of U-shaped ferrite cores 1 (11, 12) and the number n of rows of the U-shaped ferrite cores can be changed depending on the voltage and power to be handled. FIG. 7 illustrates a matrix transformer in the case of m×n = 3×4 as another aspect of the second embodiment.

(Third embodiment)

FIG. 8 illustrates a cross-sectional view of a matrix transformer used for a high-frequency switching power supply in the third embodiment of this disclosure. This embodiment uses the configuration of the first embodiment and the configuration of the second embodiment. In this embodiment, in the matrix transformer of the embodiment illustrated in FIG. 1, FIG. 2, FIG. 3, FIG. 6, and FIG. 8, bar-shaped ferrite cores 51 and 52 are sandwiched between the butt surfaces 114, 124, 214, and 224 (the butt surfaces correspond to the end faces of the legs of the U-shaped ferrite cores) of each pair of U-shaped ferrite cores 1 and 2, and are provided as magnetic path bypasses. By providing the magnetic path bypass between the two U-shaped ferrite cores that constitute the core body, a part of the magnetic flux generated by the load current of the primary coil and the secondary coil flows bypassing the bar-shaped ferrite core, so that the coupling between the primary and secondary is relaxed and a leakage inductance is obtained. This leakage inductance can be set to a desired value by adjusting the gap length of the bar-shaped ferrite core, and can be used as a resonant inductor of a high-frequency switching power supply. Considering the operating conditions of the LLC converter, it is desirable that the leakage inductance obtained by the magnetic path bypass is set to about 1/12 to 1/4 of the mutual inductance obtained by the magnetic flux flowing through the core body. In addition, by dispersing this gap to multiple locations, the fringing of the magnetic flux generated in the gap portion can be suppressed and the eddy current loss generated by linking with the coil can be reduced.

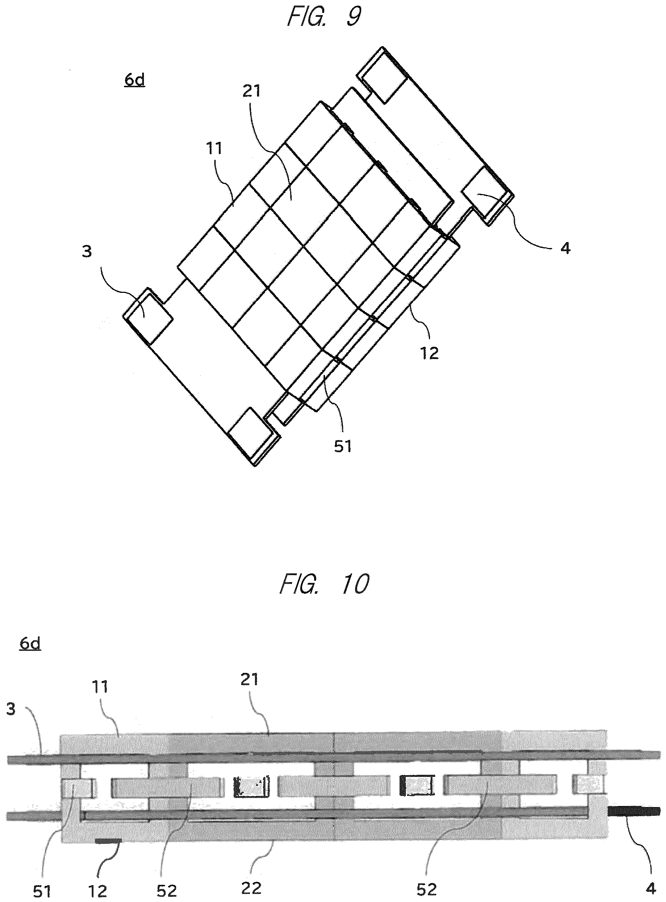

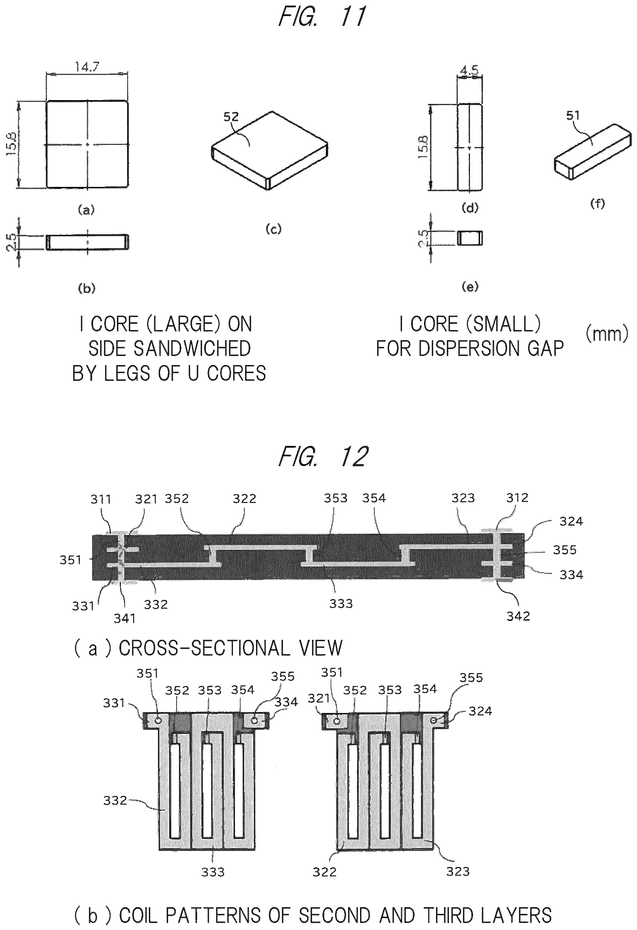

FIG. 9 illustrates a perspective view of a matrix transformer in the case of m×n = 3×4 as an aspect of the third embodiment. Further, FIG. 10 illustrates a side view thereof. As in the first and second embodiments, a high-frequency low-loss material ML95S produced by Proterial, Ltd. is used as the U-shaped ferrite cores 1 and 2 and the bar-shaped ferrite cores (corresponding to magnetic path bypasses) illustrated in FIG. 11. Note that the bar-shaped ferrite cores 51 and 52 reduce losses due to fringing by dispersing partial gaps to two locations. Further, as illustrated in FIG. 12, the configuration of the two turns (corresponding to a configuration of being wound twice) of the primary coil and secondary coil are formed using the patterns of second and third layers of a four-layer board made of FR4 which is a base material for printed circuit boards. The thickness of the copper foil is set to 50 $\mu$m at which the optimum resistance value can be obtained from the trade-off relationship between DC resistance and AC resistance. Since the outermost layer has no patten other than the terminals (1), (2), (3), and (4), it is used as an insulating layer between the coils and between the coil and the core.

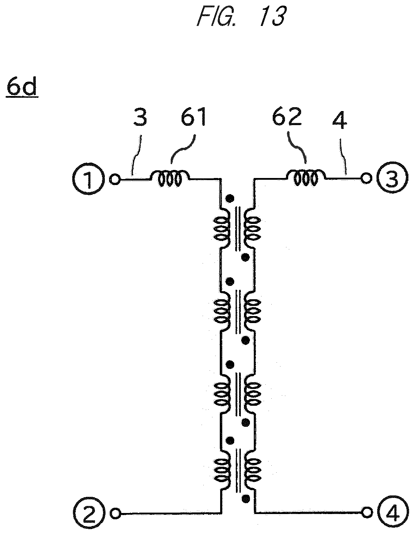

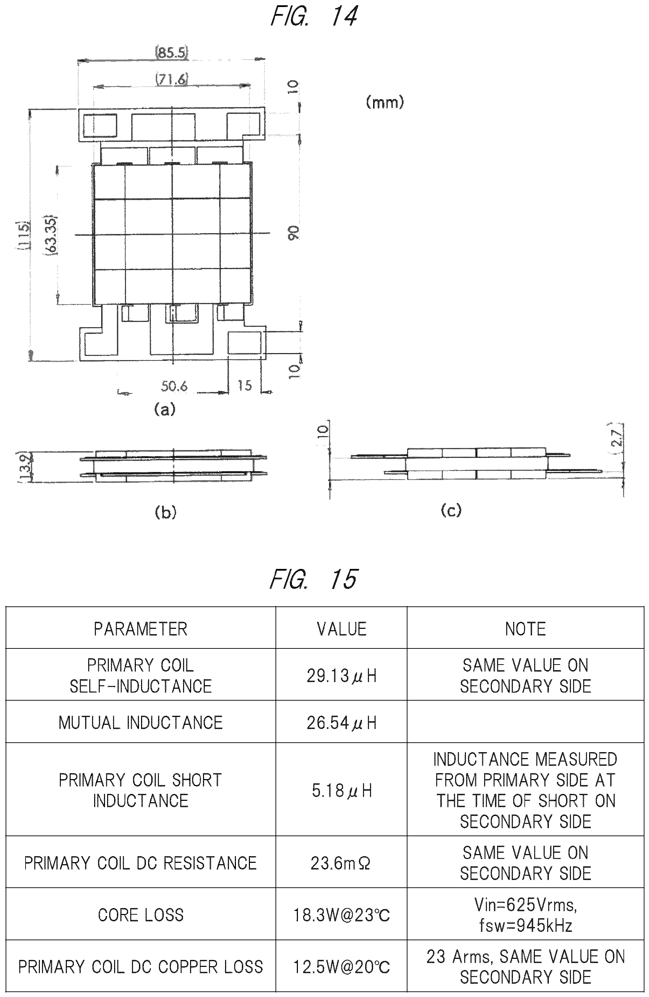

FIG. 13 illustrates a connection wiring diagram of the matrix transformer obtained by this configuration. Leakage inductors 61 and 62 are added to the primary and secondary sides, respectively. Further, FIG. 14 and FIG. 15 illustrate the external dimensions thereof and the design values of electrical characteristics.

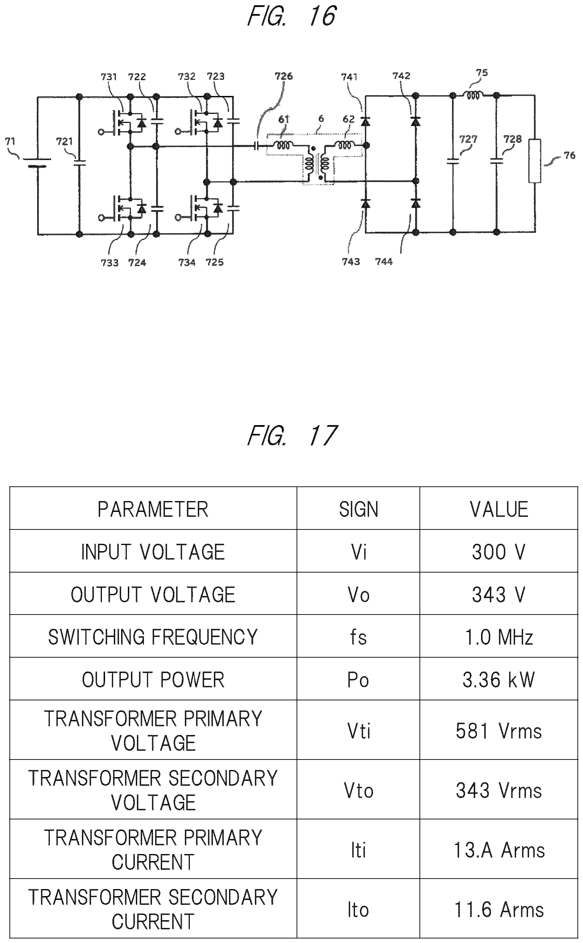

Furthermore, FIG. 16 illustrates a circuit using this matrix transformer as a transformer of an LLC converter which is a full bridge resonant converter. A DC input voltage 71 is converted into a rectangular AC by a full bridge circuit made up of four MOSFETs 731, 732, 733, and 734, and the load current is converted into a sine wave by a resonant circuit including a resonant capacitor 726 and the leakage inductor 61 of the third embodiment of this disclosure, and transmitted to the secondary side. On the secondary side, it is converted into DC by a rectifier bridge made up of four diodes 741, 742, 743, and 744 and smoothed by a smoothing circuit made up of capacitors 727 and 728 and a coil 75, and DC power is supplied to the load.

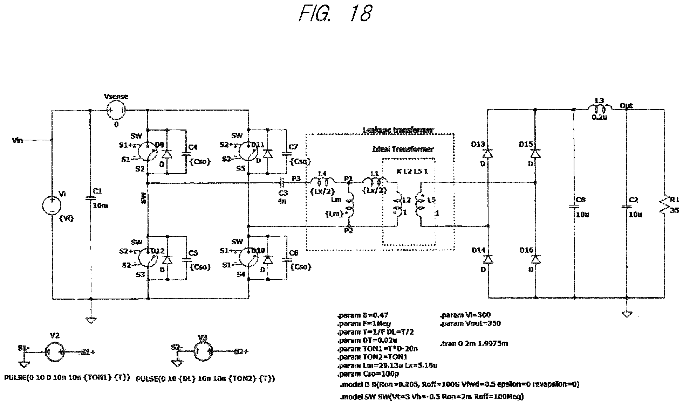

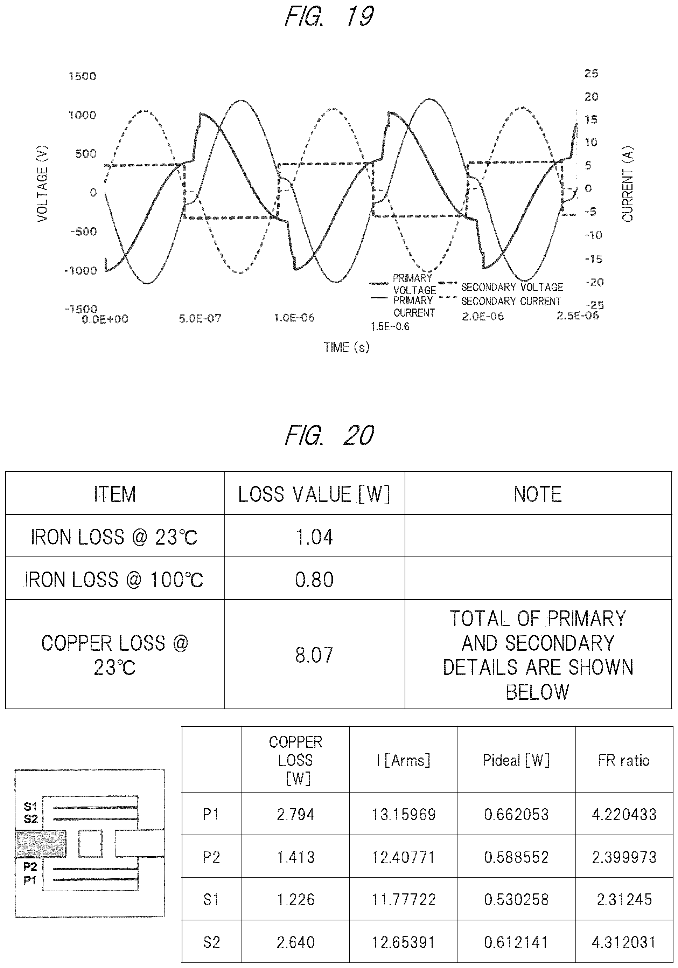

FIG. 17 illustrates design specifications of this circuit, FIG. 18 illustrates a circuit diagram thereof input on the circuit simulator LTspice (produced by Analog Devices, Inc.), FIG. 19 illustrates operating waveforms of the transformer obtained by the simulation, and FIG. 20 illustrates calculated values of the loss of the transformer obtained from the waveforms.

From the above, it can be confirmed that the matrix transformer according to this disclosure can operate properly also in an LLC converter for a high-frequency switching power supply.

(Comparison between Third Embodiment and Prior Art)

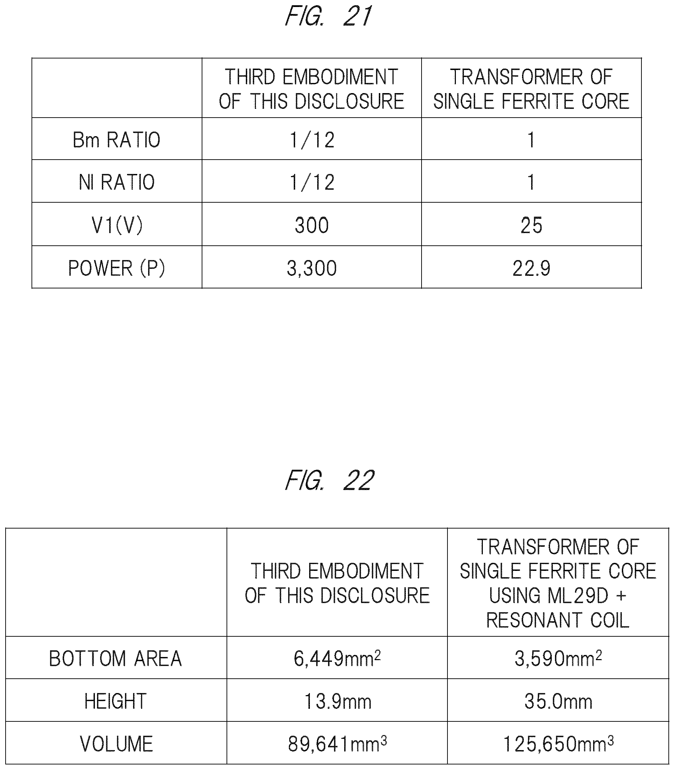

FIG. 21 illustrates the transmittable power and voltage and main magnetic characteristics of the third embodiment and a single transformer. In the equations (3) and (4), since m×n is 3×4 in this embodiment, a voltage 12 times (m×n = 12) as high as that of the single transformer can be provided and a power 144 times (($mn$)$^2$ = 144) as large as that of the single transformer can be provided.

Meanwhile, FIG. 22 illustrates the comparison in the dimensions between the third embodiment and a 100kHz transformer using a ferrite core ML29D produced by Proterial, Ltd. and resonant coil. The "bottom area" in FIG. 22 corresponds to the area (occupied area) occupied by the matrix transformer when viewed perpendicularly to the paper of FIG. 6 and FIG. 7, for example. The third embodiment is 1.8 times larger in area, but is 0.4 times in height and 0.7 times in volume. In particular, the small thickness is advantageous in the improvement of heat dissipation from the transformer and the demand for a thinner power supply. Furthermore, by integrating the resonant coil into the matrix transformer, it is possible to further reduce the cost and size of the high-frequency switching power supply.

(Fourth Embodiment)

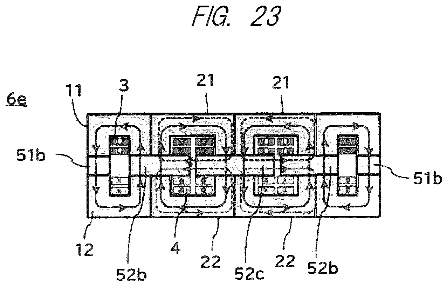

FIG. 23 is a cross-sectional view illustrating one embodiment of this disclosure. In a matrix transformer 6e of this embodiment, bar-shaped ferrite cores 52b and 52c are sandwiched between the butt surfaces (the butt surfaces correspond to the end faces of the legs of the U-shaped ferrite cores) of each pair of U-shaped ferrite cores 21 and 22, and the primary coil 3 and the secondary coil 4 are wound around the U-shaped ferrite cores 11, 12, 21, and 22. The bar-shaped ferrite cores 52b and 52c are provided as magnetic path bypasses. However, the magnetic path bypass is not provided between the bar-shaped ferrite cores 51b and 52b in the magnetic circuits at both ends using the U-shaped ferrite cores 11 and 12.

The embodiment in FIG. 23 is different from the embodiment in FIG. 8 in that the magnetic path bypass is not provided for all of the m transformers but is provided for some of the transformers. This configuration is suitable for the case of reducing the length of the magnetic gap in the magnetic path bypass, and is expected to have the effect of reducing the fringing. In the embodiment of FIG. 23, since m is 3 (m = 3) and no magnetic path bypass is provided in the magnetic circuits at both ends, the length of the magnetic gap in the two magnetic circuits at the center can be set small. Note that fringing is a phenomenon in which the magnetic flux expands in an attempt to make the cross-sectional area through which the magnetic flux passes larger than the cross-sectional area of the core, as the magnetic gap acts to reduce magnetic resistance, and the increase in fringing leads to increased losses in some cases.

The matrix transformer of this disclosure described above converts electric power into magnetic force and converts the magnetic force into electric power, and transmits energy between circuits via windings. This matrix transformer is different from a reactor. A reactor uses windings, but is a component that prevents current from flowing when the voltage changes and generates a magnetic field instead to temporarily store energy, and is therefore different from the matrix transformer of this disclosure.

**Claims**

1.   A matrix transformer used for a high-frequency switching power supply,

   wherein two U-shaped ferrite cores each having two legs and one connecting part are used to form a core body by opposing butt surfaces of the legs thereof, whereby a closed magnetic circuit is formed,
   m+1 pieces of the core body are provided in order to form m magnetic circuits of the transformer,
   a row of the core bodies to be the magnetic circuits of the transformer is configured by one-dimensionally arranging the core bodies so as to be adjacent to each other, and
   a primary coil and a secondary coil wound around the legs are provided.

2.   The matrix transformer according to claim 1,

   wherein n rows of the core bodies are provided, and
   the rows of the core bodies are arranged two-dimensionally such that the respective core bodies are adjacent to each other, whereby a core matrix to be the magnetic circuits of the transformer is configured.

3.   The matrix transformer according to claim 1 or 2,
   wherein a magnetic path bypass is provided between all or some of the two U-shaped ferrite cores constituting the core bodies.

4.   The matrix transformer according to claim 1 or 2,
   wherein, in each row, a length of the connecting parts of the U-shaped ferrite cores at both ends of the row is about 50 to 70% of a length of the connecting parts of the other U-shaped ferrite cores.

EP 4 525 008 A1

FIG. 1

FIG. 2

9

FIG. 3

*FIG. 4*

14

9

15.8

114
124

(a)

11,12

(c)

5.7

3.2

112,122

111,121

113,123

(mm)

(b)

## FIG. 5

21.8

16.8

15.8

214
224

(a)

21,22

(c)

5.7

3.2

212,222

211,221

213,223

(mm)

(b)

## FIG. 6

6b

4

11

21

3

## FIG. 7

## FIG. 8

## FIG. 9

## FIG. 10

## FIG. 11

(a)

(b)

(c)

I CORE (LARGE) ON
SIDE SANDWICHED
BY LEGS OF U CORES

(d)

(e)

(f)

I CORE (SMALL)
FOR DISPERSION GAP     (mm)

## FIG. 12

( a ) CROSS-SECTIONAL VIEW

( b ) COIL PATTERNS OF SECOND AND THIRD LAYERS

FIG. 13

## FIG. 14

(a)

(b)                                      (c)

## FIG. 15

| PARAMETER | VALUE | NOTE |
|---|---|---|
| PRIMARY COIL SELF-INDUCTANCE | $29.13\mu H$ | SAME VALUE ON SECONDARY SIDE |
| MUTUAL INDUCTANCE | $26.54\mu H$ | |
| PRIMARY COIL SHORT INDUCTANCE | $5.18\mu H$ | INDUCTANCE MEASURED FROM PRIMARY SIDE AT THE TIME OF SHORT ON SECONDARY SIDE |
| PRIMARY COIL DC RESISTANCE | $23.6m\Omega$ | SAME VALUE ON SECONDARY SIDE |
| CORE LOSS | 18.3W@23℃ | Vin=625Vrms, fsw=945kHz |
| PRIMARY COIL DC COPPER LOSS | 12.5W@20℃ | 23 Arms, SAME VALUE ON SECONDARY SIDE |

## FIG. 16

## FIG. 17

| PARAMETER | SIGN | VALUE |
|---|---|---|
| INPUT VOLTAGE | Vi | 300 V |
| OUTPUT VOLTAGE | Vo | 343 V |
| SWITCHING FREQUENCY | fs | 1.0 MHz |
| OUTPUT POWER | Po | 3.36 kW |
| TRANSFORMER PRIMARY VOLTAGE | Vti | 581 Vrms |
| TRANSFORMER SECONDARY VOLTAGE | Vto | 343 Vrms |
| TRANSFORMER PRIMARY CURRENT | Iti | 13.A Arms |
| TRANSFORMER SECONDARY CURRENT | Ito | 11.6 Arms |

FIG. 18

## FIG. 19

## FIG. 20

| ITEM | LOSS VALUE [W] | NOTE |
|---|---|---|
| IRON LOSS @ 23℃ | 1.04 | |
| IRON LOSS @ 100℃ | 0.80 | |
| COPPER LOSS @ 23℃ | 8.07 | TOTAL OF PRIMARY AND SECONDARY DETAILS ARE SHOWN BELOW |

| | COPPER LOSS [W] | I [Arms] | Pideal [W] | FR ratio |
|---|---|---|---|---|
| P1 | 2.794 | 13.15969 | 0.662053 | 4.220433 |
| P2 | 1.413 | 12.40771 | 0.588552 | 2.399973 |
| S1 | 1.226 | 11.77722 | 0.530258 | 2.31245 |
| S2 | 2.640 | 12.65391 | 0.612141 | 4.312031 |

20

## FIG. 21

|  | THIRD EMBODIMENT OF THIS DISCLOSURE | TRANSFORMER OF SINGLE FERRITE CORE |
|---|---|---|
| Bm RATIO | 1/12 | 1 |
| NI RATIO | 1/12 | 1 |
| V1(V) | 300 | 25 |
| POWER (P) | 3,300 | 22.9 |

## FIG. 22

|  | THIRD EMBODIMENT OF THIS DISCLOSURE | TRANSFORMER OF SINGLE FERRITE CORE USING ML29D + RESONANT COIL |
|---|---|---|
| BOTTOM AREA | 6,449mm$^2$ | 3,590mm$^2$ |
| HEIGHT | 13.9mm | 35.0mm |
| VOLUME | 89,641mm$^3$ | 125,650mm$^3$ |

## FIG. 23

Europäisches
Patentamt

European
Patent Office

Office européen
des brevets

# EUROPEAN SEARCH REPORT

**Application Number**

EP 24 19 8685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/185398 A1 (CUK SLOBODAN [US]) 23 July 2009 (2009-07-23) * figures 9c, 9a * * Corresponding description * ----- | 1-4 | INV. H01F27/28 H01F3/12 H01F27/255 H01F27/30 H01F38/08 H02M3/00 |
| X | US 9 472 333 B2 (FUJITSU LTD [JP]) 18 October 2016 (2016-10-18) * figures 1-11 * * Corresponding description * ----- | 1-4 | |
| A | EP 3 576 116 A1 (DELTA ELECTRONICS INC [TW]) 4 December 2019 (2019-12-04) * figures 1A,2,3A-C * * Corresponding description * ----- | 1-4 | |
| A | US 10 910 140 B2 (VIRGINIA TECH INTELLECTUAL PROPERTIES INC [US]) 2 February 2021 (2021-02-02) * the whole document * ----- | 1-4 | |
| | | | **TECHNICAL FIELDS SEARCHED (IPC)** H01F H02M |

The present search report has been drawn up for all claims

| Place of search | Date of completion of the search | Examiner |
|---|---|---|
| Munich | 23 January 2025 | Weisser, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8685

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | | Publication date | Patent family member(s) | | Publication date |
|---|---|---|---|---|---|
| US 2009185398 | A1 | 23-07-2009 | US 2009185398 A1 | | 23-07-2009 |
| | | | WO 2009158230 A1 | | 30-12-2009 |
| US 9472333 | B2 | 18-10-2016 | JP 6471415 B2 | | 20-02-2019 |
| | | | JP 2015207694 A | | 19-11-2015 |
| | | | US 2015302972 A1 | | 22-10-2015 |
| EP 3576116 | A1 | 04-12-2019 | CN 108777220 A | | 09-11-2018 |
| | | | EP 3576116 A1 | | 04-12-2019 |
| | | | JP 7391817 B2 | | 05-12-2023 |
| | | | JP 2019208008 A | | 05-12-2019 |
| | | | JP 2021040144 A | | 11-03-2021 |
| | | | TW 202004790 A | | 16-01-2020 |
| | | | US 2019362885 A1 | | 28-11-2019 |
| | | | US 2022336144 A1 | | 20-10-2022 |
| US 10910140 | B2 | 02-02-2021 | NONE | | |

EPO FORM P0459

For more details about this annex : see Official Journal of the European Patent Office, No. 12/82

**EP 4 525 008 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023149037 A
- JP 2024044788 A
- US 20180026182 A
- US 20190379292 A
- US 20200350117 A